# EUROPEAN PATENT APPLICATION

(11) **EP 2 581 198 A1**
(43) Date of publication of application: **17.04.2013**
(21) Application number: 11791961.3
(22) Date of filing: 06.05.2011
(51) Int. Cl.: B29C 45/40

(54) **SYSTEM FOR OPENING MOVABLE ELEMENTS IN MOULDS IN ORDER TO EXTRACT THE MOULDED PARTS**

(30) Priority: 11.06.2010 ES 201000775
(71) Applicant: Irumold S.L., 31012 Pamplona Navarra (ES)
(72) Inventor: ANTOÑANA GASTESI, Francisco Javier, E-31012 Pamplona Navarra (ES); GALE ONECA, Felix, E-31012 Pamplona Navarra (ES); BERRO PREBOSTE, Jose Javier, E-31012 Pamplona Navarra (ES); LARUMBE SAN MARTIN, Luis, E-31012 Pamplona Navarra (ES)
(86) International application number: PCT/ES2011/000153
(87) International publication number: WO 2011/154565

(57) **Abstract**

Opening device with slides in moulds to extract the moulded parts. The cavity is formed by mobile parts that can be removed to release the moulded parts. The cavity of the moulds is formed by slides that are installed on the corresponding holders that are fixed to the corresponding racks connected among them through a connection element, preferably a gear, and that are simultaneously activated with a driving element.

## Description

### Scope of the technique

This invention is related to the high precision injection moulds and it proposes an automatic opening device of the slides of the said moulds, enabling the easy draft of the moulded parts with undercuts without any deterioration.

### State of the technique

In some sectors, like for example the medical or pharmaceutical sector, precision tools are commonly used. In some occasions, these tools are very small and they are produced using special injection moulds.

When the parts that have to be obtained must be formed with cavity inserts of the production moulds, those cavity inserts become undercuts making the draft process of the parts difficult.

The cavity inserts can present cores, to be inserted in the part, or cavities to host the part.

In order to solve that problem, the moulds with mobile parts called slides are used. This way, when the moulding of the parts is finished, the slides of the mould are removed to release the moulded part. With the solutions existing for this problem, it is normal that during the draft process the parts and the moulding elements get deteriorated. This leads to a great number of rejections of the deteriorated parts and, as a consequence, an increase in the costs of the useful parts and of the mould maintenance because of the damages that can be caused.

### Scope of the invention

According to the invention, it is proposed an opening device of the slides of the moulds used to produce the parts by means of which it is successfully performed the removal of the said slides containing the cavity inserts of the mould. This way, it is possible to release the moulded parts, for the draft process, without deteriorating them.

This invented system consists of the creation of a cavity with mobile slides, arranged in a displacement assembly in opposite senses through racks connected among them by a gear and activated by a single driving device. This way, the cavity has a holder on the lower area that includes an ejector mechanism axially disposed.

Thus, it is obtained a mould that offers the possibility to place cavity inserts in the slides that constitute the cavity in order to create empty areas in the moulding parts. For the ejection of the moulded parts, the said slides are moved in opposite directions thanks to the rack they are coupled to. The resulting part of the moulding will be on the lower holder.

Each rack can have more than one slide fixed corresponding to the said cavity or to a different one.

Thus, it is obtained a system that precisely drafts, in an automatic way, moulded parts with undercuts, offering a draft process that minimizes the number of driving elements needed. This way, the distortion of the moulded parts is prevented and so is the percentage of rejections, thus significantly reducing the production costs.

Similarly, it is minimized the distortion of the moulds reducing the derivative maintenance costs.

The invented system is very good for its function and its use is preferential to the conventional systems with the same application.

### Description of the figures

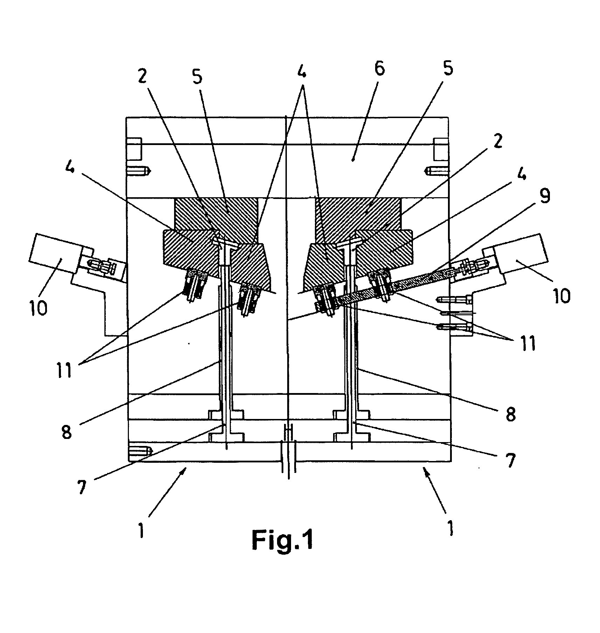

Figure 1 schematically shows a mould with two cavities provided with the invented system, in closed position. The displacement actuator of the slides is not represented in one of the cavities.
Figure 2 is a view of the ensemble of the previous figure with the mould open in the joint plane.
Figure 3 is a view of the same mould ensemble with the slides of the mould removed releasing the moulded parts.
Figure 4 is a view of the mould in the ejection process of the moulded parts.
Figure 5 is a top view of the driving ensemble of the invented system.

### Detailed description of the invention

The object of the invention is referred to a system in charge of the opening of a mould (1) for the production of parts (2) formed with cavity inserts (3) arranged in the cavity. This invention enables the driving of the slides (4) of the mould (1) and the effective and safe release of the moulding parts (2).

The system consists of the formation of the cavity in the moulds (1) with slides (4) arranged in a displacement assembly in opposite senses. The cavity has a part (5) in the upper side linked to the cover (6) of the mould and in the lower side it has a holder (7) provided with an ejection mechanism (8) that can be displaced upwards in respect to the said holder (7).

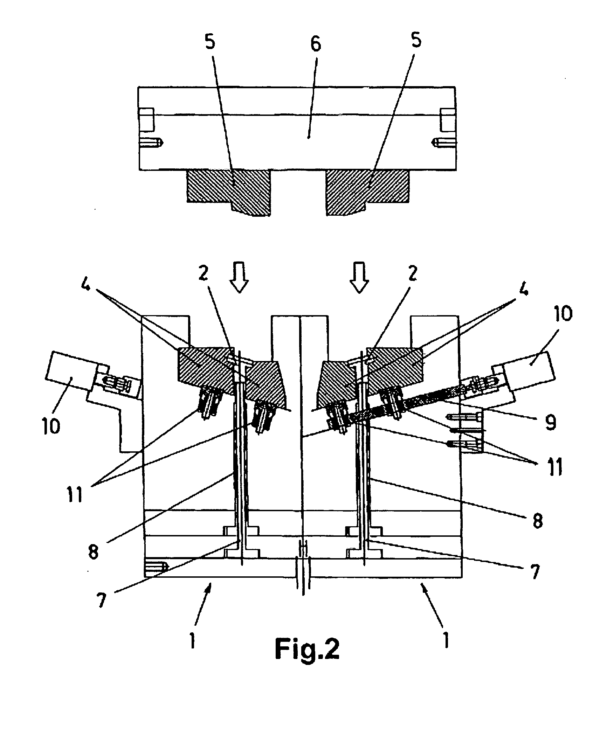

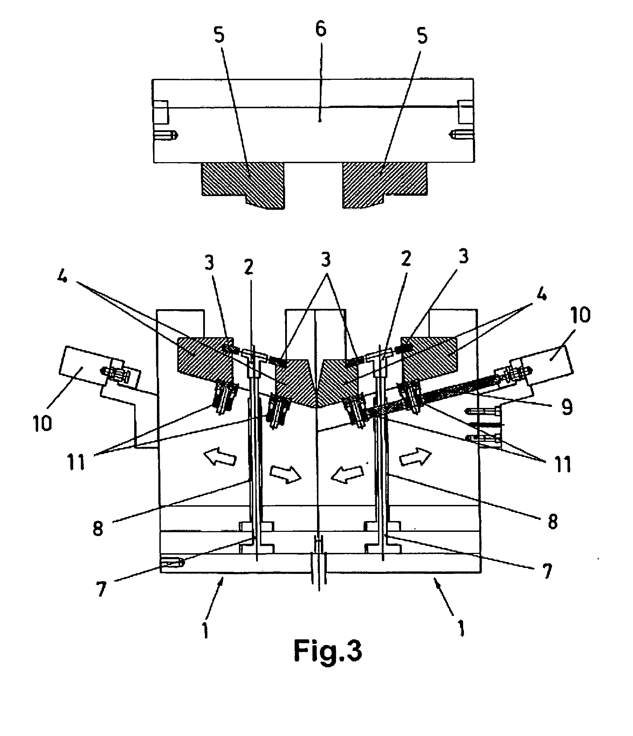

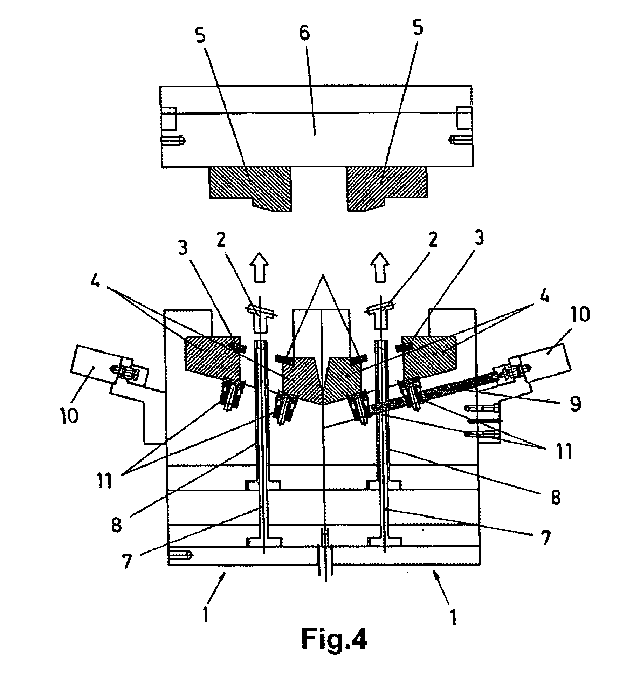

Thus, it is obtained a disposition that enables the incorporation of cavity inserts (3) in the slides (4) of the cavity in order to mould the parts (2). For the draft process, when moving the ensemble in respect of the cover (6), the cavity is open in the upper side, as represented in figure 2, and activating then the displacement of the slides (4) the moulded part (2) is released and it appears on the holder (7), as represented in figure 3. From this position and thanks to the activation of the ejection mechanism (8) of the holder (7), the part (2) is ejected in order to be removed, as represented in figure 4.

The movement of the slides (4) of the cavity is performed through the two racks (9) that operate in opposite directions over the slides (4) (the slides are also moved). This way, the racks (9) separate for the release of the moulded parts (2) and approach to close the mould (1).

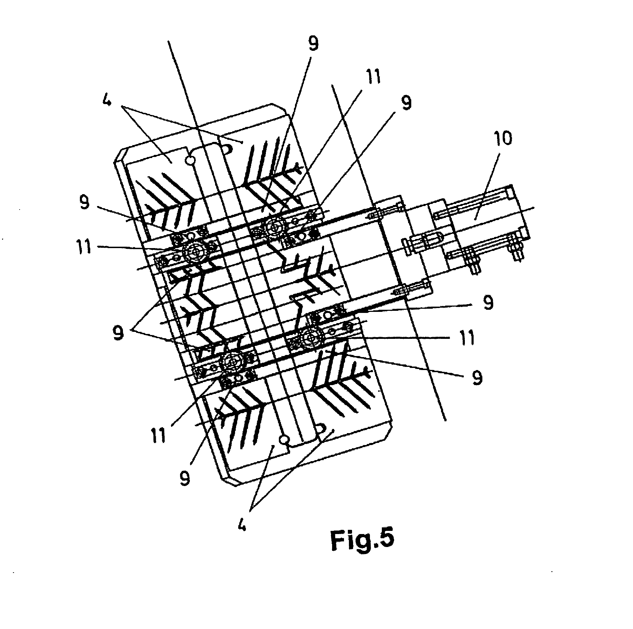

As represented in figure 5, the racks (9) that move the slides (4) of a cavity are linked together through a gear (11) that is activated by a driving element (10) of linear activation. Through the turning activation of the gear (11), it is performed the simultaneous displacement of the slides (4), separating or approaching, depending on the turning direction.

The performance is not limited and the driving element (10) may be any kind of pneumatic, hydraulic, electric, magnetic mechanism that provides a movement that automatically displaces the slides (4) in a simultaneous way in opposite directions, separating and approaching them.

Similarly, the driving device (10) can also operate directly over the rack (9) of a slide (4) that, at the same time, is connected to a gear (11) and that gear (11) is also connected to the rack (9) of the other slide (4) of the same cavity, performing on this second slide (4) an opposite movement.

## Claims

1. Opening device of slides in moulds to eject the moulded parts. The cavity is formed by mobile parts that can be removed to release the moulded parts. The cavity of the moulds (1) is formed by slides (4). The slides are arranged in a displacement assembly in opposite directions through the use of the corresponding racks (9) linked among them through a connection element, like a gear (11) for example. The movement of the slides (4) is simultaneously activated with a driving element (10).

2. Opening device of slides in moulds for the ejection of moulded parts, according to the first claim, distinguished because in each rack (9) one or several slides (4) from one or various cavities can be installed.
